# EUROPÄISCHE PATENTANMELDUNG

(11) **EP 3 957 957 A1**
(43) Veröffentlichungstag der Anmeldung: **23.02.2022**
(21) Anmeldenummer: 21191656.4
(22) Anmeldetag: 17.08.2021
(51) Int. Cl.: G01D 5/14, B62D 15/02

(54) **SENSOR ZUM ERFASSEN EINER POSITION**

(30) Priorität: 20.08.2020 DE 102020121895
(71) Anmelder: Bourns, Inc., Riverside, CA 92507 (US)
(72) Erfinder: Mueller, Peter, 80796 München (DE)
(74) Vertreter: von Bülow & Tamada

(57) **Zusammenfassung**

Die Erfindung betrifft einen Sensor (9) zum Erfassen einer Position auf einem sich in einer Wegrichtung (24) erstreckenden Weg, umfassend:
- ein Geberelement (16) mit wenigstens einem Mittenmagnet (39) und zwei Randmagneten (37), die in der Wegrichtung (24) gesehen vor und hinter dem Mittenmagnet (39) angeordnet sind, wobei die Magnetpole (35, 36) der Magnete (37, 39) quer (22) zur Wegrichtung (24) ausgerichtet und eingerichtet sind, ein in der Wegrichtung (24) veränderliches Magnetgeberfeld (17) abzugeben,
- einen Messaufnehmer (18), der eingerichtet ist ein Messsignal (20) auszugeben, welches vom am Messaufnehmer (18) ankommenden Magnetgeberfeld (17) abhängig ist, wobei das Geberelement (16) und der Messaufnehmer (18) in der Wegrichtung (24) gegeneinander beweglich angeordnet sind, und
- eine Auswerteeinrichtung (21), welche eingerichtet ist, basierend auf dem Messsignal (20) ein von der relativen Lage zwischen dem Messaufnehmer (18) und dem Geberelement (16) abhängiges Sensorsignal (19) auszugeben,
- wobei in der Wegrichtung (24) gesehen der Mittenmagnet (39) eingerichtet ist, einen größeren magnetischen Fluss zu erregen, als die Randmagnete (37).

## Beschreibung

Die vorliegende Erfindung betrifft einen Sensor zum Erfassen einer Position auf einem sich in einer Wegrichtung erstreckenden Weg und ein Fahrzeug mit dem Sensor.

Es ist Aufgabe der Erfindung, einen Sensor zum Erfassen einer Position auf einem sich in einer Wegrichtung erstreckenden Weg anzugeben, der die zu erfassende Position mit einem möglichst geringen Messfehler ausgibt.

Die Aufgabe wird durch die Merkmale des unabhängigen Anspruchs gelöst. Bevorzugte Weiterbildungen sind Gegenstand der abhängigen Ansprüche.

Gemäß einem Aspekt der Erfindung umfasst ein Sensor zum Erfassen einer Position auf einem sich in einer Wegrichtung erstreckenden Weg, ein Geberelement mit wenigstens einem Mittenmagnet und zwei Randmagneten, die in der Wegrichtung gesehen vor und hinter dem Mittenmagnet angeordnet sind, wobei die Magnetpole der Magnete quer zur Wegrichtung ausgerichtet und eingerichtet sind, ein in der Wegrichtung veränderliches Magnetgeberfeld abzugeben, einen Messaufnehmer, der eingerichtet ist ein Messsignal auszugeben, welches vom am Messaufnehmer ankommenden Magnetgeberfeld abhängig ist, wobei das Geberelement und der Messaufnehmer in der Wegrichtung gegeneinander beweglich angeordnet sind, und eine Auswerteeinrichtung, welche eingerichtet ist, basierend auf dem Messsignal ein von der relativen Lage zwischen dem Messaufnehmer und dem Geberelement abhängiges Sensorsignal auszugeben, wobei in der Wegrichtung gesehen der Mittenmagnet eingerichtet ist, einen größeren magnetischen Fluss zu erregen, als die Randmagnete.

Dem angegebenen Sensor liegt die Überlegung zugrunde, dass sich ein am Messaufnehmer ankommender Feldvektor des magnetischen Feldes beim relativen Bewegen des Geberelementes zum Messaufnehmer um die Querrichtungsachse dreht und dass die Orientierung des am Messaufnehmer ankommenden Feldvektors ein geeignetes Maß darstellt, die relative Lage des Geberelementes zum Messaufnehmer und damit die zu erfassende Position zu bestimmen. Allerdings bleibt der Betrag des Feldvektors über den Weg gesehen nicht konstant. Diese Feldvektorschwankungen führen schlussendlich zu Messfehlern in der zu erfassenden Position führen.

Um den Betrag des Feldvektors über den Weg so konstant wie möglich zu halten, könnten über den Weg möglichst viele kurze Magnetpole hintereinander angeordnet werden. In Messungen wurde allerdings herausgefunden, dass sich der Betrag des Feldvektors über den Weg auch konstanter halten lässt, wenn über die Wegrichtung betrachtet in der Mitte des Geberelementes angeordneter Magnetpol länger ausgebildet ist, als Magnetpole, die über die Wegrichtung gesehen an den Enden des Geberelementes angeordnet sind.

Der angegebene Sensor gibt daher eine Position auf einem sich in einer Wegrichtung erstreckenden Weg mit einem geringen Messfehler aus. Gegenüber einem Geberelement, in dem eine Vielzahl kurzstreckiger Magnetpole angeordnet werden müssen, um den Feldvektor so konstant wie möglich zu halten, kommt der angegebene Sensor mit deutlich weniger Magnetpolen aus und lässt sich daher auch günstiger und mit weniger Bauraumbedarf herstellen.

In einer Weiterbildung des angegebenen Sensors ist der Mittenmagnet zum Erregen des größeren magnetischen Flusses um 30 % bis 60%, vorzugsweise 40% bis 50%, besonders bevorzugt 44% größer, als jeder der Randmagneten. Sind die Randmagnete in der Wegrichtung zu kurz gewählt, entfalten Sie zu wenig Wirkung. Sind sie zu lang gewählt, könnte ihre Wirkung einen möglichst konstanten Feldvektor, wie zuvor beschrieben, nicht erreicht werden. In der angegebenen Konfiguration ist die Wirkung der Randmagnete im Zusammenspiel mit dem Mittenmagnet zum Erreichen eines möglichst konstanten Feldvektors optimal.

In einer weiteren Weiterbildung des angegebenen Sensors sind im Geberelement in der Wegrichtung gesehen vor und nach dem Mittenmagnet je ein Übergangsmagnet angeordnet, an die sich in der Wegrichtung gesehen die Randmagnete anschließen. Die Übergangsmagnete kodieren im Zusammenspiel mit dem Mittenmagnet den Weg und lösen die über den Weg erfassbaren Positionen höher auf.

In einer besonderen Weiterbildung des angegebenen Sensors ist der Übergangsmagnet kleiner oder gleich dem Mittenmagnet, allerdings größer als die Randmagnete. Auf diese Weise wird sichergestellt, dass die oben genannte Wirkung, eine möglichst konstante Feldstärke über den Weg zu erhalten, erreicht wird.

In einer bevorzugten Weiterbildung der angegebenen Sensors liegt ein Messbereich zur Erfassung der Position in der Wegrichtung gesehen zwischen den Übergangsmagneten. Dieser Weiterbildung liegt die Überlegung zugrunde, dass sich der Betrag des Feldstärkevektors zu den in der Wegrichtung gesehenen Rändern des Geberelementes hin immer stark verändern wird. Die möglichst hohe Konstanz des Feldstärkevektors wird vor allem zur in der Wegrichtung gesehenen Mitte des Geberelementes hin erreicht. Daher ist die Mitte des Geberelementes ein besonders günstiger Ort, um den Gedanken hinter dem angegebenen Sensor auszunutzen.

In einer anderen Weiterbildung umfasst der angegebene Sensor einen weiteren Messaufnehmer, der in der Wegrichtung gesehen vor oder hinter dem Messaufnehmer angeordnet und eingerichtet ist, ein weiteres Messsignal auszugeben, welches vom am Messaufnehmer ankommenden Magnetgeberfeld abhängig ist, wobei das Geberelement und der weitere Messaufnehmer in der Wegrichtung gegeneinander beweglich angeordnet sind, und wobei die Auswerteeinrichtung, eingerichtet ist, basierend auf einer Differenz der beiden Messsignale das Sensorsignal auszugeben. Auf diese Weise lassen sich störende Mittelwerte aus dem Messsignal herausfiltern und ein Fehler in der Positionserfassung weiter reduzieren.

In einer besonders bevorzugten Weiterbildung des angegebenen Sensors liegt einer der Randmagnete zumindest teilweise in einem Messbereich zur Erfassung der Position. Durch Versuche konnte nachgewiesen werden, dass sich in diesem Bereich der Fehler des angegebenen Sensors im Zusammenspiel mit der zuvor genannten differenziellen Messung noch einmal deutlich reduzieren lässt.

In einer noch anderen Weiterbildung des angegebenen Sensors ist die Wegrichtung eine Tangentialrichtung, so dass die zu erfassende Position eine Winkelposition ist.

Gemäß einem weiteren Aspekt der Erfindung umfasst ein Fahrzeug ein in einer Fahrrichtung bewegliches Chassis, zwei Vorderräder, welche das Chassis in der Fahrrichtung gesehen an der Vorderseite tragen, zwei Hinterräder, welche das Chassis in der Fahrrichtung gesehen an der Rückseite tragen, ein Lenkrad zum Drehen einer Lenkwelle um eine Rotationsachse, zum Einschlagen der Vorderräder, einen der angegebenen Sensoren zum Erfassen einer Relativposition zwischen einem zum Lenkrad gerichteten Teil der Lenkwelle und einem zu den Vorderrädern gerichteten Teil der Lenkwelle, und einen Motor zum Einstellen des Einschlages der Vorderräder in Abhängigkeit der erfassten Relativposition.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 schematisch eine perspektivische Ansicht eines Fahrzeuges mit einem Lenksystem,
Fig. 2 eine schematische Ansicht einer Ausführung eines Sensor zum Erfassen einer Position in einer Anwendung als Drehmomentensensor für das Lenksystem aus Fig. 1,
Fig. 3 eine schematische Ansicht einer Teilkonfiguration des Drehmomentensensors für das Lenksystem aus Fig. 1,
Fig. 4 eine Skizze eines alternativ möglichen Geberelementes für den Drehmomentensensor der Figs. 2 und 3,
Fig. 5 eine Skizze eines weiter alternativ möglichen Geberelementes für den Drehmomentensensor der Figs. 2 und 3,
Fig. 6 eine Skizze eines noch weiter alternativ möglichen Geberelementes für den Drehmomentensensor der Figs. 2 und 3,
Fig. 7 eine Darstellung eines Verlaufs von Messfehlern für das Geberelement im Drehmomentensensor nach Fig. 3,
Fig. 8 eine Skizze einer Weiterbildung des Drehmomentensensors nach Fig. 3, und
Fig. 9 eine Darstellung eines Verlaufs von Messfehlern für das Geberelement nach Fig. 6 eingesetzt im Drehmomentensensor nach Fig. 3.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

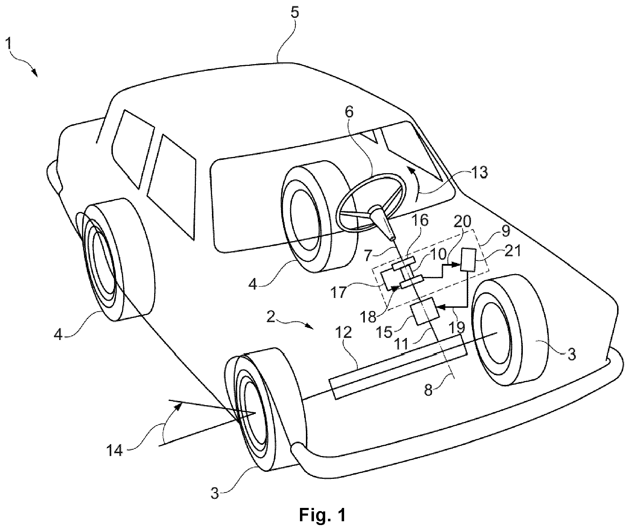

Es wird auf Fig. 1 Bezug genommen, die schematisch eine perspektivische Ansicht eines Fahrzeuges 1 mit einem Lenksystem 2 zeigt.

Das Fahrzeug 1 umfasst im vorliegenden Ausführungsbeispiel ein auf zwei Vorderrädern 3 und auf zwei Hinterrädern 4 getragenes Chassis 5. Die Vorderräder 3 können dabei über das Lenksystem 2 eingeschlagen werden, damit mit dem Fahrzeug 1 eine Kurve gefahren werden kann.

Das Lenksystem 2 umfasst ein Lenkrad 6, das auf eine erste Lenkwelle 7 aufgesetzt ist, die wiederum um eine Rotationsachse 8 drehbar angeordnet ist. Die erste Lenkwelle 7 ist in einen Sensor 9 zur Erfassung einer Position, hier in Form einer Winkelposition, geführt und dort in nicht weiter spezifizierter Weise mit einem Torsionselement 10 verbunden. An dieses Torsionselement 10 schließt sich auf der der ersten Lenkwelle 7 gegenüberliegenden Seite auf der Rotationsachse 8 eine zweite Lenkwelle 11 an, die wiederum in einem Lenkgetriebe 12 endet. Wird das Lenkrad 6 mit einem Drehmoment in Form eines Lenkmomentes 13 gedreht, wird das Lenkmoment 13 entsprechend über die Lenkwellen 7, 11 an das Lenkgetriebe 12 übertragen, welches als Reaktion darauf die Vorderräder 3 für die Kurvenfahrt mit einem Radeinschlag 14 einschlägt.

Der Lenkvorgang wird mit einem Hilfsmotor 15 unterstützt, der die zweite Lenkwelle 11 hilfsweise mitdreht. Hierzu wird das Lenkmoment 13 aus der relativen Winkelposition zwischen der ersten Lenkwelle 7 zur zweiten Lenkwelle 11 abgeleitet, die mit dem Sensor 9 erfasst wird. Der Hilfsmotor 15 dreht dann unter anderem in Abhängigkeit des erfassten Lenkmomentes 13 die zweite Lenkwelle 11.

Zur Erfassung der zuvor genannten Winkelposition und damit des Lenkmomentes 13 umfasst der Sensor 9 ein mit der ersten Lenkwelle 7 verbundenes Magnetgeberelement 16, welches ein magnetisches Feld 17 erregt. Der Sensor 9 umfasst ferner einen mit der zweiten Lenkwelle 11 verbundenen Messaufnehmer 18, welcher das magnetische Feld 17 aus dem Magnetgeberelement 16 in Abhängigkeit einer relativen Winkelposition der ersten Lenkwelle 7 und damit des Magnetgeberelementes 16 zur zweiten Lenkwelle 11 empfängt und ein vom empfangenen Magnetfeld abhängiges Messsignal 20 an eine Auswerteeinrichtung 21 weiterleitet. Das Messsignal 20 trägt damit als Information die zu erfassende Winkelposition. Die Auswerteeinrichtung 21 bestimmt basierend auf dem Messsignal 20 die relative Winkelposition der beiden Lenkwellen 7, 11 zueinander und gibt ein davon abhängiges Sensorsignal 19 aus, welches somit aufgrund der Elastizität des Torsionselementes 10 auch vom Lenkmoment 13 abhängig ist. Das Sensorsignal 19 ist damit unmittelbar vom zu erfassenden Lenkmoment 13 abhängig, so dass der Hilfsmotor 15 diese Information unmittelbar zum Drehen der zweiten Lenkwelle 11 weiterverarbeiten kann.

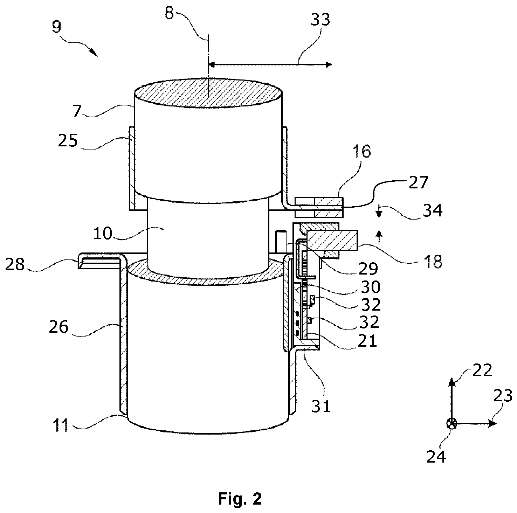

Es wird auf Fig. 2 Bezug genommen, die eine Ausführung des Sensors 9 zeigt.

Zur Beschreibung des Sensors 9 wird ein Raum im Zylinderkoordinatensystem angenommen, der durch eine Axialrichtung 22, eine Radialrichtung 23 und eine Umfangsrichtung 24 aufgespannt ist. Die Axialrichtung 22 ist in Richtung der Rotationsachse 8 ausgerichtet, während die Umfangsrichtung 24 umfänglich um die Rotationsachse 8 herum ausgerichtet ist. Die Radialrichtung 23 erstreckt sich radial zur Rotationsachse 8.

In diesem Zylinderkoordinatensystem umfasst der Sensor 9 eine sich um die Rotationsachse 8 herum erstreckende erste Lagerbuchse 25 zur kraftschlüssigen Aufnahme der ersten Lenkwelle 7 und eine zweite Lagerbuchse 26 zur kraftschlüssigen Aufnahme der zweiten Lenkwelle 11.

Dabei besitzt die erste Lagerbuchse 25 ein Haltemittel 27, an dem das Magnetfeldgeberelement 16 beispielsweise über einen Kleber befestigt ist. Auf diese Weise ist das Magnetfeldgeberelement 16 ortsfest an der ersten Lenkwelle 7 gehalten, wenn diese in die erste Lagerbuchse 25 eingepresst ist.

An der zweiten Lagerbuchse 26 ist ein Träger 28, hier in Form eines Flansches, ausgebildet. Am Träger 28 ist mittels Zapfen 29 ein Leiterplattenhalter 30 gehalten, der auf der in der Axialrichtung 22 gesehenen gegenüberliegenden Seite an einem Loslagerelement 31 abgestützt ist. In dem Leiterplattenhalter 30 ist die Auswerteeinrichtung 21 in Form einer Leiterplatte aufgenommen, an die wiederum der Messaufnehmer 18 beispielsweise durch Anlöten elektrisch und mechanisch angebunden ist. Das Messsignal 20 aus dem Messaufnehmer 18 wird in der Auswerteeinrichtung 21 mittels elektrischer Komponenten 32 verarbeitet und als Sensorsignal 19 über eine in Fig. 2 nicht weiter sichtbare Schnittstelle an den Hilfsmotor 15 weitergeleitet.

Wenn im Betrieb des Sensors 9 die erste Lenkwelle 7 gedreht und die Drehung über Torsionselement 10 auf die zweite Lenkwelle 11 übertragen wird, drehen sich die an der ersten Lenkwelle 7 kraftschlüssig gehaltene erste Lagerbuchse 25 mit dem Magnetfeldgeberelement 16 und die an der zweiten Lenkwelle 11 gehaltene zweite Lagerbuchse 26 mit dem Messaufnehmer 18. Bedingt durch Trägheit der zweiten Lenkwelle 11 und die Elastizität des Torsionselementes 10 verdreht sich beim Drehen der ersten Lenkwelle 7 diese gegenüber der zweiten Lenkwelle 11. In der Folge verdreht sich auch das Magnetfeldgeberelement 16 gegenüber dem Messaufnehmer 18 in der Umgangsrichtung 24 als Wegrichtung.

Das magnetische Feld 17 des Magnetfeldgeberelementes 16 verändert sich über die Umfangsrichtung 24. Verdreht sich daher das Magnetfeldgeberelement 16 gegenüber dem Messaufnehmer 18 verändert sich das am Messaufnehmer 18 ankommende Magnetfeld 17. Da die Verdrehung des Magnetfeldgeberelement 16 gegenüber dem Messaufnehmer 18, und damit die mit dem Sensor 9 zu erfassende Position auf dem in der Umfangsrichtung 24 verlaufenden Weg aufgrund der Elastizität des Torsionselementes 10 von der Höhe des Lenkmomentes 13 abhängig ist, sind somit auch das am Messaufnehmer 18 ankommende Magnetfeld 17, das Messsignal 20 und schließlich das Sensorsignal 19 von der Höhe des Lenkmomentes 13 abhängig.

Das Magnetfeldgeberelement 16 ist in Form eines Magnetringsegmentes ausgebildet, das in einem radialen Ringabstand 33 umfänglich um die Rotationsachse 8 geführt ist. Dabei ist auch der Messaufnehmer 18 mit dem radialen Ringabstand 33 beabstandet zur Rotationsachse 8 angeordnet, so dass sich das Magnetfeldgeberelement 16 und der Messaufnehmer 18 radial überlappen. Als Bezugspunkt zur Bestimmung des radialen Ringabstandes 33 des Messaufnehmers 18 und des Magnetfeldgeberelementes 16 wurden in Fig. 2 die Mittelpunkte dieser Elemente in der Ausdehnung der Radialrichtung 23 gewählt. Zusätzlich zur radialen Überlappung ist das Magnetfeldgeberelement 16 zum Messaufnehmer 18 in einem axialen Messabstand 34 angeordnet.

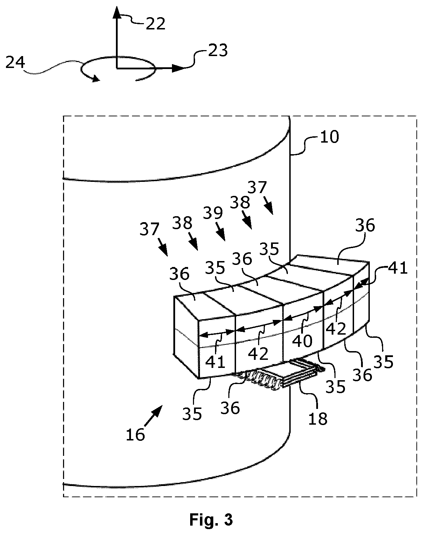

Auf den Aufbau des Magnetfeldgeberelementes 16 wird nachstehend anhand Fig. 3 näher eingegangen, die eine schematische Ansicht einer Teilkonfiguration des zuvor erläuterten Sensors 9 für das Lenksystem aus Fig. 1 zeigt.

Das Magnetfeldgeberelement 16 ist hier aus fünf Einzelmagneten zusammengesetzt, die in der Umgangsrichtung 24 als Wegrichtung aneinandergereiht sind. Jeder Einzelmagnet ist ein Dipol mit einem Nordpol 35 und einem Südpol 36. Die Dipole sind über die Umfangsrichtung 24 in der Axialrichtung 22 und damit quer zur Umfangsrichtung 24 ausgerichtet. Die Orientierung von in der Umfangsrichtung 24 aufeinanderfolgender Dipole ist jeweils in der Axialrichtung 22 umgekehrt, so dass das Magnetfeldgeberelement 16 eingerichtet ist, ein in der Umfangsrichtung 24 veränderliches Magnetgeberfeld abzugeben.

Die in der Umfangsrichtung 24 gesehenen an den Außenseiten befindlichen Einzelmagnete werden nachstehend als Randmagnete 37 bezeichnet, während die sich an die Randmagnete 37 anschließenden Einzelmagnete nachstehend als Übergangsmagnete 38 bezeichnet werden. Alle übrigen Einzelmagnete, die sich gegenüberliegend zu den Randmagneten 37 an die Übergangsmagnete 38 anschließen werden nachstehend als Mittenmagnete 39 bezeichnet. In der Ausführung der Fig. 3 besitzt das Magnetfeldgeberelement 16 in nicht einschränkender Weise nur einen einzigen Mittenmagnet 39.

In der Ausführung der Fig. 3 besitzen die Einzelmagnete 37, 38 und 39 in der Umgangsrichtung 24 als Wegrichtung gesehen unterschiedliche Längen. Ausgehend von einer in der Umgangsrichtung 24 gesehenden Mittenmagnetlänge 40 des Mittenmagnetes 39 besitzen die beiden Randmagnete 37 eine in der Umgangsrichtung 24 gesehene Randmagnetlänge 41, die kleiner ist, als die Mittenmagnetlänge 40. Unter der Annahme, dass der Mittenmagnet 39 und die beiden Randmagnete 37 gleich stark magnetisiert sind, erregt der Mittenmagnet 39 so einen größeren magnetischen Fluss, als jeder der beiden Randmagnete 37.

Diese schwächere magnetische Flusserregung der Randmagnete 37 kann grundsätzlich auch anderweitig erreicht werden, beispielsweise, indem die Randmagnete 37 schwächer magnetisiert werden, als der Mittenmagnet 39. Auch eine Kombination der beiden zuvor genannten Ausführungen zur schwächeren magnetische Flusserregung der Randmagnete 37 gegenüber dem Mittenmagnet 39 wäre möglich.

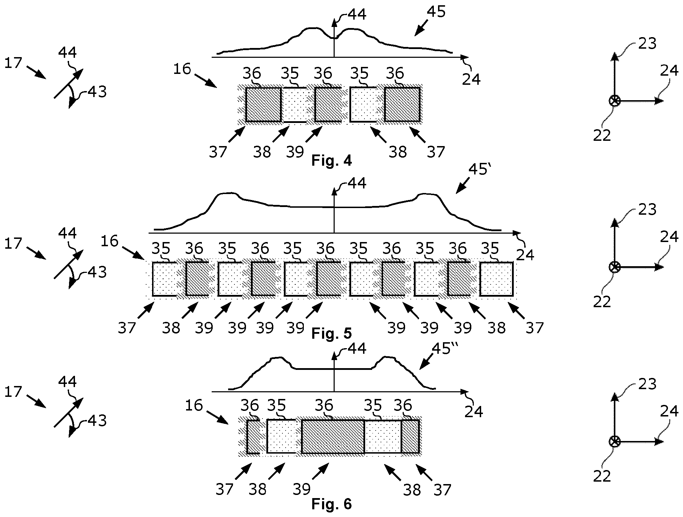

Die Idee hinter der Schwächung der magnetischen Flusserregung der Randmagnete 37 gegenüber dem Mittenmagnet 39 soll nachstehend anhand der Figs. 4 bis 6 näher erläutert werden.

Zunächst wird anhand Fig. 4 der Fall betrachtet, dass alle Einzelmagnete 37, 38, 39 den gleichen magnetischen Fluss erregen. Das heißt, alle Einzelmagnete 37, 38, 39 sind gleich lang und gleich magnetisiert. Aus wirtschaftlicher Sicht ist die gewünscht, weil sich das Magnetfeldgeberelement 16 so aus einheitlichen Standardelementen zusammensetzen lässt.

Es sei an die obige Fig. 1 erinnert, in der erläutert wurde, dass das am Messaufnehmer 18 ankommende Magnetfeld 17 die Information im Messsignal 20 bestimmt, welche die zu erfassende Winkelposition beschreibt. Diese Information sollte möglichst in einem linearen Zusammenhang zur zu erfassenden Winkelposition stehen. Hierzu hat sich die Phase 43 des am Messaufnehmer 18 ankommenden Magnetfeldes 17 als geeignet erwiesen, allerdings unter der Voraussetzung, dass der Betrag 44 des am Messaufnehmer 18 ankommenden Magnetfeldes 17 über Umfangsrichtung 24 konstant bleibt.

In Fig. 4 ist ein Verlauf 45 des Betrages 44 des am Messaufnehmer 18 ankommenden Magnetfeldes 17 über die Umfangsrichtung 24 für das Magnetfeldgeberelement 16 aufgetragen, das analog zu Fig. 3 aus einem Mittenmagnet 39, aus zwei Übergangsmagneten 38 und zwei Randmagneten 37 zusammengesetzt ist, wobei allerdings alle Einzelmagnete 37, 38, 39 den gleichen magnetischen Fluss erregen.

Zwar ist ein solches Magnetfeldgeberelement 16 bauraumsparend, allerdings ist der Verlauf 45 des Betrages 44 des am Messaufnehmer 18 ankommenden Magnetfeldes 17 an keiner Stelle der Umfangsrichtung 24 konstant, was bei der Erfassung der Winkelposition über die Phase 43 des am Messaufnehmer 18 ankommenden Magnetfeldes 17 deutliche Nichtlinearitäten in die Messung einträgt. Zur Korrektur dieser Nichtlinearitäten sind, soweit überhaupt möglich, Filter notwendig, zu deren Umsetzung Rechenressourcen notwendig sind.

Eine Möglichkeit, den Betrag 44 des am Messaufnehmer 18 ankommenden Magnetfeldes 17 über in der Umfangsrichtung 24 bereichsweise konstant zu halten ist in Fig. 5 gezeigt. Hierzu wird das in Fig. 4 gezeigte Magnetfeldgeberelement 16 einfach um weitere Mittenmagnete 39 ergänzt. Auf diese Weise lässt sich der Betrag 44 des am Messaufnehmer 18 ankommenden Magnetfeldes 17 zumindest im Bereich der in der Umgangsrichtung 24 gesehenen innersten Mittenmagneten 39 konstant halten. Dies ist einem Verlauf 45' über dem Magnetfeldgeberelement 16 der Fig. 5 angedeutet.

Allerdings wird zur Umsetzung unnötig Bauraum benötigt.

Die alternative Lösung, die auch im Sensor 9 der Fig. 2 umgesetzt ist, ist in Fig. 6 skizziert. Dort ist der Mittenmagnet 39 gegenüber den Randmagneten 37 in der Umfangsrichtung 24 verlängert ausgebildet und erregt so einen größeren magnetischen Fluss, als die Randmagnete. Mit dieser Lösung lässt sich der Betrag 44 des am Messaufnehmer 18 ankommenden Magnetfeldes 17 im Bereich des Mittenmagnetes 39 konstant halten. Dies ist einem Verlauf 45" über dem Magnetfeldgeberelement 16 der Fig. 6 angedeutet.

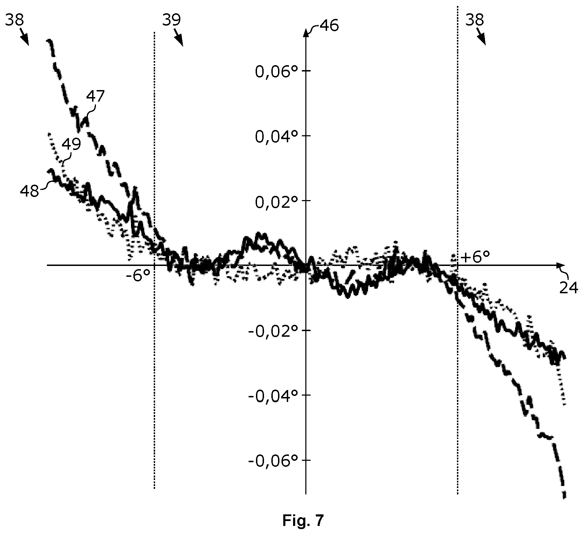

Die zuvor erläuterte Idee, den Betrag 44 des am Messaufnehmer 18 ankommenden Magnetfeldes 17 mit einem in der Umfangsrichtung 24 gesehenen nicht konstanten magnetischen Fluss konstant zu halten, soll nachstehend anhand eines Vergleichs von in Fig. 7 abgebildeten Messergebnissen näher erläutert werden.

In Fig. 7 sind in einem Koordinatensystem Fehlerwerte 46 über die Umfangsrichtung 24 aufgetragen. Zur Aufzeichnung der Fehlerwerte 46 wurde die zweite Lenkwelle 11 fixiert und die erste Lenkwelle 7 in und entgegen der Umgangsrichtung 24 gegenüber der zweiten Lenkwelle 11 verdreht. Auf diese Weise konnten in der Umgangsrichtung 24 beliebige relativen Winkelposition zwischen der ersten und zweiten Lenkwelle 7, 11 eingestellt werden.

Mit den Fehlerwerten 46 wird für eine tatsächliche relative Winkelposition zwischen den beiden Lenkwellen 7, 11 in der Umfangsrichtung 25 ein Unterschied zu einem mit dem Sensor 9 erfassten Messwert für diese tatsächliche relative Winkelposition beschrieben.

In Fig. 7 sind mit einer gestrichelten Fehlerkurve 47 Fehlerwerte 46 aufgetragen, die sich bei Verwendung eines Magnetfeldgeberelementes 16 gemäß Fig. 4 in dem Sensor 9 ergeben haben. In diesem Magnetfeldgeberelement 16 besaßen die Einzelmagnete 37, 38 und 39 eine Ausdehnung in der Umfangsrichtung 24 von je 12°, was eine Gesamtausdehnung von 60° in der Umgangsrichtung 24 ergibt. Das Magnetfeldgeberelement 16 erstreckte sich ferner in der Radialrichtung 23 zwischen 15.5mm und 21.5mm und besaß in der Axialrichtung 22 eine Höhe von 5mm. Der Messaufnehmer 18 wurde in der Radialrichtung 23 bei 18,5mm und in der Axialrichtung 22 1,5mm über dem Magnetfeldgeberelement 16 angeordnet.

In Fig. 7 sind mit einer durchgezogenen Fehlerkurve 48 Fehlerwerte 46 aufgetragen, die sich bei Verwendung eines Magnetfeldgeberelementes 16 gemäß Fig. 3 in dem Sensor 9 ergeben haben. In diesem Magnetfeldgeberelement 16 besaßen der Mittenmagnet 39 und die Übergangsmagnete 38 eine Ausdehnung in der Umfangsrichtung 24 von je 12°, während die Randmagnete 37 je eine Ausdehnung von 9° besaßen, was wiederum eine Gesamtausdehnung von 54° in der Umgangsrichtung 24 ergibt. Wie zur Erfassung der gestrichelten Fehlerkurve 47 erstreckte sich das Magnetfeldgeberelement 16 ferner in der Radialrichtung 23 zwischen 15.5mm und 21.5mm und besaß in der Axialrichtung 22 eine Höhe von 5mm. Der Messaufnehmer 18 wurde in der Radialrichtung 23 bei 18,5mm und in der Axialrichtung 22 1,5mm über dem Magnetfeldgeberelement 16 angeordnet.

Mit einer gepunkteten Differenzkurve 49 ist der Unterschied zwischen der gestrichelten Fehlerkurve 47 und der durchgezogenen Fehlerkurve 48 dargestellt.

Aus dem Vergleich der beiden Fehlerkurven 47 und 48 sowie aus der Differenzkurve 49 ist unmittelbar ersichtlich, dass sich ein Magnetfeldgeberelement 16 mit gegenüber dem Mittenmagneten 39 verkürzten Randmagneten 37 über einen deutlich größeren Winkelbereich mit einem vergleichsweise kleinen Messfehler verwenden lässt, wobei ein derartiges Magnetfeldgeberelement 16 in der Umfangsrichtung 24 sogar noch bauraumsparender ausgebildet ist.

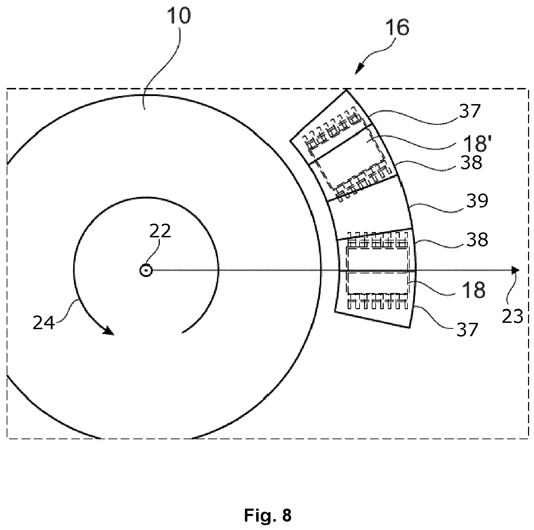

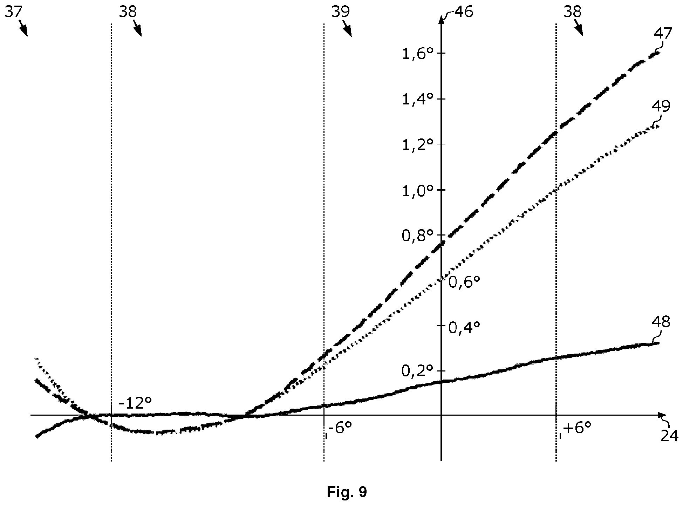

Anhand der Fig. 8 und 9 wird nun die Wirkung des anhand der Figs. 3 bis 6 erläuterten Magnetfeldgeberelementes 16 in einer differenziellen Messung beschrieben. Hierzu ist der Aufbau aus Fig. 3 um einen weiteren Messaufnehmer 18' erweitert, der vom Messaufnehmer 18 in der Umgangsrichtung 24 mit 30° beabstandet ist. Alle übrigen Konfigurationen aus Fig. 3, insbesondere die geometrischen Abmessungen wurden beibehalten.

Bei der differenziellen Messung wird zur Bestimmung des Sensorsignal 19 das Messsignal 20 des einen Messaufnehmers 18 vom in den Figuren nicht weiter gezeigten Messsignal des anderen Messaufnehmers 18' abgezogen. Analog zur Fig. 7 sind in Fig. 9 die Fehlerkurven 47 und 48 und die Differenzkurve 49 für die differenzielle Messung der relativen Winkelposition zwischen den beiden Lenkwellen 7, 11 aufgetragen.

Aus den Fehlerkurven 47 und 48 und der Differenzkurve 49 ist unmittelbar ersichtlich, dass sich bei einer Verwendung eines Magnetfeldgeberelementes 16 mit im magnetischen Fluss abgeschwächten Randmagneten 37 der Fehler im Bereich des in der Umgangsrichtung 24 gesehenen hinteren Übergangsmagneten 38 zum Randmagnet 37 hin nahezu auslöschen lässt.

## Patentansprüche

1. Sensor (9) zum Erfassen einer Position auf einem sich in einer Wegrichtung (24) erstreckenden Weg, umfassend:
- ein Geberelement (16) mit wenigstens einem Mittenmagnet (39) und zwei Randmagneten (37), die in der Wegrichtung (24) gesehen vor und hinter dem Mittenmagnet (39) angeordnet sind, wobei die Magnetpole (35, 36) der Magnete (37, 39) quer (22) zur Wegrichtung (24) ausgerichtet und eingerichtet sind, ein in der Wegrichtung (24) veränderliches Magnetgeberfeld (17) abzugeben,
- einen Messaufnehmer (18), der eingerichtet ist ein Messsignal (20) auszugeben, welches vom am Messaufnehmer (18) ankommenden Magnetgeberfeld (17) abhängig ist, wobei das Geberelement (16) und der Messaufnehmer (18) in der Wegrichtung (24) gegeneinander beweglich angeordnet sind, und
- eine Auswerteeinrichtung (21), welche eingerichtet ist, basierend auf dem Messsignal (20) ein von der relativen Lage zwischen dem Messaufnehmer (18) und dem Geberelement (16) abhängiges Sensorsignal (19) auszugeben,
- wobei in der Wegrichtung (24) gesehen der Mittenmagnet (39) eingerichtet ist, einen größeren magnetischen Fluss zu erregen, als die Randmagnete (37).

2. Sensor (9) nach Anspruch 1, wobei der Mittenmagnet (39) zum Erregen des größeren magnetischen Flusses um 30 % bis 60%, vorzugsweise 40% bis 50%, besonders bevorzugt 44% größer ist, als jeder der Randmagneten (37).

3. Sensor (9) nach einem der vorstehenden Ansprüche, wobei im Geberelement (16) in der Wegrichtung (24) gesehen vor und nach dem Mittenmagnet (39) je ein Übergangsmagnet (38) angeordnet sind, an die sich in der Wegrichtung (24) gesehen die Randmagneten (37) anschließen.

4. Sensor (9) nach Anspruch 3, wobei der Übergangsmagnet (38) kleiner oder gleich dem Mittenmagnet (39) und größer als die Randmagnete (37) ist.

5. Sensor (9) nach Anspruch 3 oder 4, wobei ein Messbereich zur Erfassung der Position in der Wegrichtung (24) gesehen zwischen den Übergangsmagneten (38) liegt.

6. Sensor (9) nach einem der vorstehenden Ansprüche, umfassend einen weiteren Messaufnehmer (18'), der in der Wegrichtung (24) gesehen vor oder hinter dem Messaufnehmer (18) angeordnet und eingerichtet ist, ein weiteres Messsignal auszugeben, welches vom am Messaufnehmer ankommenden Magnetgeberfeld (17) abhängig ist, wobei das Geberelement (16) und der weitere Messaufnehmer (18') in der Wegrichtung (24) gegeneinander beweglich angeordnet sind, und wobei die Auswerteeinrichtung (21), eingerichtet ist, basierend auf einer Differenz der beiden Messsignale (20) das Sensorsignal (19) auszugeben.

7. Sensor (9) nach Anspruch 6, wobei einer der Randmagnete (37) zumindest teilweise in einem Messbereich zur Erfassung der Position liegt.

8. Sensor (9) nach Anspruch 7, wobei im Messbereich der zuvor genannte Randmagnet (37) und sein benachbarter Übergangsmagnet (38) liegt.

9. Sensor (9) nach einem der vorstehenden Ansprüche, wobei die Wegrichtung (24) eine Tangentialrichtung ist, so dass die zu erfassende Position eine Winkelposition ist.

10. Fahrzeug (1), umfassend
- ein in einer Fahrrichtung bewegliches Chassis (5),
- zwei Vorderräder (3), welche das Chassis (5) in der Fahrrichtung gesehen an der Vorderseite tragen,
- zwei Hinterräder (4), welche das Chassis (5) in der Fahrrichtung gesehen an der Rückseite tragen,
- ein Lenkrad (6) zum Drehen einer Lenkwelle (7, 11) um eine Rotationsachse (8), zum Einschlagen der Vorderräder (3),
- einen Sensor (9) nach einem der vorstehenden Ansprüche, zum Erfassen einer Relativposition zwischen einem zum Lenkrad (6) gerichteten Teil (7) der Lenkwelle und einem zu den Vorderrädern gerichteten Teil (11) der Lenkwelle, und
- einen Motor (15) zum Einstellen des Einschlages der Vorderräder (3) in Abhängigkeit der erfassten Relativposition.
